# EUROPÄISCHE PATENTSCHRIFT

(11) **EP 0 608 302 B1**
(45) Veröffentlichungstag und Bekanntmachung des Hinweises auf die Patenterteilung: **31.05.1995**
(21) Anmeldenummer: 92921406.2
(22) Anmeldetag: 16.10.1992
(51) Int. Cl.: H04B 1/12, H01Q 1/32

(54) **ANTENNENEMPFANGSVERFAHREN**
AERIAL RECEPTION PROCESS
PROCEDE DE RECEPTION PAR ANTENNE

(30) Priorität: 17.10.1991 DE 4134415
(43) Veröffentlichungstag der Anmeldung: 03.08.1994
(73) Patentinhaber: Richard Hirschmann GmbH & Co., 73728 Esslingen (DE)
(72) Erfinder: SCHENKYR, Dieter, D-7318 Hochwang (DE); KREISSIG, Uwe, D-7326 Heinigen (DE); KIRSCHNER, Peter, D-7022 Leinfelden-Echterdingen (DE); ECKSTEIN, Michael, D-7052 Schwaikheim (DE); STRAYLE, Andreas, D-7400 Tübingen (DE)
(74) Vertreter: Geyer, Ulrich F., Dr. Dipl.-Phys.
(86) Internationale Anmeldenummer: EP9202388
(87) Internationale Veröffentlichungsnummer: WO9308647

(56) Entgegenhaltungen:
- WO-A-91/11830
- US-A- 4 320 535
- US-A- 4 727 377
- US-A- 4 751 514

## Beschreibung

Die Erfindung betrifft ein Antennenempfangsverfahren, bei dem dem Empfangssignal ein Störsignal störsignalkompensativ zu addiert wird.

Ein derartiges Antennenempfangsverfahren ist aus der US-A-43 20 535 bekannt. Ein von einem Satelliten abgestrahltes Empfangssignal, welches im Zentimeter-Wellenlängenbereich liegt, wird von einer als Parabolantenne ausgebildeten Hauptantenne empfangen. Um eine Störung des eigentlichen, empfangenen Nutzsignals durch terrestrische Mikrowellensysteme bzw. Sender wie Mikrowellenrelaisstationen unwirksam zu machen, ist eine Hilfsantenne vorgesehen, die auf die terrestrische Störsignalquelle ausgerichtet ist und das Störsignal empfängt. Dieses Störsignal wird hinsichtlich seiner Phase und Amplitude derart verändert, daß es als Kompensationssignal mit dem eigentlichen Empfangssignal kombiniert wird. Die Wellenlängen des Empfangssignals und des Störsignals liegen dabei im Zentimeter-Bereich, sind also wesentlich kleiner als die Abmaße der Antennen.

Weitere Antennenempfangsverfahren beispielsweise für Fahrzeuge, sind in vielfältigsten Formen bekannt. Aus der auf dieselbe Anmelderin zurückgehenden DE 40 03 385 A1 sind beispielsweise Antennenempfangsverfahren unter Verwendung integrierter Antennen bekannt, die in den Stoßstangen oder Scheiben eines Kraftfahrzeugs ausgebildet sind. Weiterhin sind Magnetfeldsonden zum induktiven Abgriff von Karosserieströmen bekannt.

Die Fahrzeuge, beispielsweise Kraftfahrzeuge, für die das Antennenempfangsverfahren vorgesehen sind, sind selbst Quellen für Störsignale, die den Empfang erheblich beeinträchtigen. Beispielsweise stellen die Zündung oder auch andere geschaltete induktive Lasten, beispielsweise Gleichstrommotoren, in den Kraftfahrzeugen, Störquellen dar. Die Störungen erstrecken sich dabei frequenzmäßig über den gesamten Empfangsbereich, beispielsweise über den gesamten Bereich der Lang-, Mittel- und Kurzwellen. Besonders im Lang- und Mittelwellenbereich, aber auch bis in den UKW-Bereich werden durch die Zündung, die Elektronik und insbesondere auch durch die immer häufiger im Zusammenhang mit Kraftfahrzeugen verwendeten Mikroprozessoren Störungen verursacht. Die Intensität und Spektren der Störsignale hängen bei den unterschiedlichen Fahrzeugtypen insbesondere vom Einbauort und der Positionierung der verwendeten Antennen ab. Dabei werden Störsignale im Lang-, Mittel- und Kurzwellenbereich insbesondere bei großen Wellenlängen hauptsächlich leitungsgebunden verschleppt. Im UKW-Bereich breiten sich die Störsignale in einer Mischform zwischen leitungsgeführter und abgestrahlter Welle aus.

Bei bekannten Antennenempfangsverfahren werden die durch das Kraftfahrzeug oder Teile desselben hervorgerufenen Störungen des Empfangssignals dadurch versucht klein zu halten, daß der Einbauort der Antennen hinsichtlich einer möglichst kleinen Störung geeignet gewählt wird. Der Wahl des Einbauorts von Antennen sind bei Fahrzeugen jedoch in technischer Hinsicht und auch im Hinblick auf Design Aspekte Grenzen gesetzt. Dies gilt insbesondere bei der Verwendung integrierter Antennen, beispielsweise bei in Stoßfängern, Spoilern oder Scheiben integrierten Antennen, wobei häufig sogar die Antennenstruktur vorbestimmt ist. Dabei kommt es auch vor, daß bei den verschiedenen Fahrzeugtypen Antennen oder Einbauorte für Antennen auf Grund der dann auftretenden großen Störpegel nicht genutzt werden können.

Als Leitersysteme, die Störungen transportieren, sind alle leitfähigen Gebilde eines Fahrzeugs geeignet, die gegenüber der Metallkarosserie elektrisch isoliert oder mit dieser über eine hohe Impedanz verbunden sind. Derartige, die Störsignale transportierenden Leitersysteme sind beispielsweise Kabelbäume, aber auch der Auspuff sowie Teile des Antriebssystems, die zur Schwingungsentkopplung auf Gummi gelagert sind. Sie können diese Störsignale weiterleiten. Der Motorblock kann zwar über Massebänder mit dem Fahrgestell verbunden sein, es treten jedoch dennoch bei transienten elektrischen Vorgängen Potentialdifferenzen, beispielsweise zwischen dem Auspuff und der Karosserie auf. Sogar auf der Karosserie selbst ergeben sich Spannungsdifferenzen.

Insbesondere bei der Verwendung von Fahrzeugantennen am Fahrzeugheck oder als integrierte Antennen in Stoßstangen, wie dies in der bereits erwähnten DE 40 03 385 A1 beschrieben ist, wird insbesondere für den UKW-Empfang eine besondere große Entkopplunbg von den fahrzeugeigenen Störquellen gefordert. Insbesondere eine Lang-, Mittel- und Kurzwellenantenne weist in diesem Fahrzeugbereich auf Grund der Nähe zum Auspuff und zum Kabelbaum, etwa einer Anhängerkupplung, einen so hohen Störpegel auf, daß hier ohne Zusatzmaßnahmen kein Lang-, Mittel-, oder Kurzwellenempfang möglich wäre.

Grundsätzlich ist es zwar möglich, die durch die elektromagnetischen Störungen hervorgerufenen Schwierigkeiten beim Rundfunkempfang durch eine komplette Entstörung des gesamten Kraftfahrzeugs zu beseitigen. Die damit verbundenen hohen Kosten verbieten jedoch in der Regel diese Lösung.

Eine weitere grundsätzliche Möglichkeit, dieses Problem zu lösen, besteht auch darin, zu verhindern, daß die Störungen im Bereich der Heckstoßstange mit nennenswertem Pegel auftreten, indem in diesem Bereich sämtliche Störleiter mit der Karosserie kurzgeschlossen werden. Das Auspuffendrohr müßte dazu mit einem Masseband leitend mit der Karosserie verbunden werden, und die elektrischen Leitungen, die vom Motorraum zum Fahrzeugheck führen, müßten mittels kapazitiver Kopplung zur Karosserie kurzgeschlossen werden. In der Praxis ist dieser Gesamtaufwand für die Einzelmaßnahmen jedoch wirtschaftlich nicht sinnvoll, zumal dadurch dem Fahrzeughersteller erhebliche zusätzliche Kosten entstehen.

Der Erfindung liegt daher die Aufgabe zugrunde, ein Antennenempfangsverfahren anzugeben, mit dem durch einfache Mittel ein genügend großer Störabstand beim Rundfunkempfang erreicht werden kann.

Die gestellte Aufgabe wird erfindungsgemäß durch die kennzeichnenden Maßnahmen des Anspruchs 1 gelöst.

Das erfindungsgemäße Verfahren ermöglicht es, den Rundfunkempfang wesentlich zu verbessern und insbesondere Einschränkungen hinsichtlich der Antennenformen und der Anbringungsorte von Antennen etwa an Fahrzeugen aufzuheben. Für die Erhöhung des Signal-Störabstands sind insbesondere auch keine Entstörmaßnahmen beim Fahrzeug mit dem dadurch notwendigen hohen Fertigungsaufwand erforderlich. Die mit dem erfindungsgemäßen Antennenempfangsverfahren erreichte Freiheit, die Wahl des Antennenstandorts und auch die Antennenformen frei wählen zu können, ist insbesondere auch im Hinblick auf die Verwendung integrierter Antennensysteme von großen Vorteil, weil bei integrierten Antennen der Antennenstandort durch die gewünschte, mögliche Einbauweise vorgegeben ist.

Gemäß einer vorteilhaften Ausführungsform der Erfindung wird das Störsignal vor dem Addieren mit dem Empfangssignal in seiner Amplitude und/oder seiner Phase verändert, wobei es besonders vorteilhaft ist, das Störsignal vor dem Addieren mit dem Empfangssignal phasenmäßig um 180° zu drehen.

Die Amplitude des Störsignals wird vor dem Addieren mit dem Empfangssignal vorzugsweise so geändert, daß nach der Addition des Störsignals mit dem Signal der eingentlichen Lang-, Mittel- und Kurzwellenempfangsantenne ein Summensignal mit maximalem Signal-Störabstand erreicht wird. Dadurch ergibt sich eine zuverlässige Kompensation der durch das Fahrzeug selbst verursachten Störung auf dem Antennensignal mit einfachen Mitteln. Es lassen sich Dämpfungen des Störpegels im Empfangssignal nach der Addition von 10 bis 15 dB erreichen, wobei Dämpfungen im Langwellenbereich bis 25 dB möglich sind. Insbesondere bei großen Wellenlängen ergibt sich durch eine einfache Invertierung und eine über die Frequenz konstante Dämpfung bzw. Verstärkung des Störsignals ein wesentlich besserer Signal-Störabstand des Empfangssignals.

Gemäß einer weiteren sehr vorteilhaften Ausführungsform wird die Amplitude und/oder Phase des Störsignals vor dem Addieren mit dem Empfangssignal frequenzabhängig vorgenommen. Dadurch läßt sich eine weitere Verbesserung der Signal-Störabstands des Empfangssignals nach der Addition erzielen.

Das Abgreifen des fahrzeugeigenen Störsignals erfolgt vorzugsweise an einem die Störung weiterleitenden Leitersystem. Das fahrzeugeigene Störsignal wird durch wenigstens eine galvanische Kopplung abgegriffen. Wenn kein direkter elektrischer Kontakt möglich oder zulässig ist, ist es besonders vorteilhaft, das fahrzeugeigene Störsignal über eine induktive und/oder kapazitive Kopplung abzugreifen.

Wenigstens eine der Empfangsantennen kann eine Teleskopantenne, aber auch wenigstens eine integrierte Antenne, etwa eine in einer Stoßstange, einem Spoiler oder einer Scheibe integriere Antenne, sein.

Gemäß einer besonders vorteilhaften Ausführungsform des erfindungsgemäßen Antennenempfangsverfahrens wird das Störsignal mit wenigstens einer zusätzlichen Antennensonde abgegriffen. Die für den Abgriff des Störsignals eigens vorgesehene Antennensonde ist etwa eine kleine leitende Fläche mit einer Abmessung von beispielsweise 10 x 15 cm. Im Falle, daß die Empfangsantenne in einer Stoßstange integriert ist, kann auch diese zusätzliche für den Störsignalabgriff vorgesehene Antennensonde, wie die Lang-, Mittel- und Kurzwellen-Empfangsantenne auch, innerhalb der Stoßstange vorgesehen sein. Vorzugsweise ist die Antennensonde dort angeordnet, wo die Störfeldstärke ein Maximum aufweist, beispielsweise wischen dem Auspuff und der Fahrzeugunterseite. Mit einem einfachen Leitungsdraht wird das Störsignal von der Antennensonde zu einem Verstärker geführt, wo es beispielsweise mit einem gegensinnig angeschlossenen Übertrager in der Phase um 180° gedreht wird. Durch eine zusätzliche Änderung der Amplitude dieses Störsignals ergibt sich bei der nachfolgenden Addition mit dem Signal der eigentlichen Lang-, Mittel- und Kurzwellen-Empfangsantenne ein Summensignal mit maximalem Signal-Störabstand.

Besonders vorteilhaft wirkt sich das gezielte Ankoppeln an die Störquelle aus, da damit das Nutzsignal im Störsignalzweig mit so geringem Pegel vorliegt, daß das Nutzsignal durch die Kompensationsmaßnahmen keine nennenswerte Dämpfung erfährt.

Obgleich die Anwendung des erfindungsgemäßen Antennenempfangsverfahren im Zusammenhang mit einer Stoßstangenantenne, wie sie beispielsweises aus der DE 40 03 385 A1 bekannt ist, besonders vorteilhaft ist, beschränkt sich die Anwendung des Antennenempfangsverfahrens jedoch nicht auf eine derartige Antennenform. Durch den mit dem erfindungsgemäßen Antennenempfangsverfahren erzielten Vorteil, hinsichtlich der Antennenform und dem Anbringungsort der einzelnen Antennen frei wählen zu können, ergeben sich insbesondere auch für die Diversity-Verfahren erhebliche Vorteile, da die Möglichkeit, dekorrelierte Antennen für das Diversity-System vorsehen zu können, praktisch uneingeschränkt möglich ist.

## Patentansprüche

1. Antennenempfangsverfahren, bei dem dem Empfangssignal ein Störsignal störsignalkompensativ zuaddiert wird, dadurch gekennzeichnet, daß das Empfangssignal im Kurz-, Mittel- oder Langwellen-Rundfunkbereich liegt und mit wenigstens einer Fahrzeug-Antenne empfangen wird, und daß das Störsignal durch das Fahrzeug verursacht und an oder nahe einem Ort der maximalen Störfeldstärke abgegriffen wird.

2. Antennenempfangsverfahren nach Anspruch 1, dadurch gekennzeichnet, daß das Störsignal vor dem Addieren mit dem Empfangssignal in seiner Amplitude und/oder Phase verändert wird.

3. Antennenempfangsverfahren nach Anspruch 1 oder 2, dadurch gekennzeichnet, daß das Störsignal vor dem Addieren mit dem Empfangssignal phasenmäßig um 180° gedreht wird.

4. Antennenempfangsverfahren nach einem der vorhergehenden Ansprüche, dadurch gekennzeichnet, daß die Amplitude des Störsignals vor dem Addieren mit dem Empfangssignal so geändert wird, daß nach der Addition ein maximaler Signal-Störabstand des Empfangssignals auftritt.

5. Antennenempfangsverfahren nach einem der vorhergehenden Ansprüche, dadurch gekennzeichnet, daß die Änderung der Amplitude und/oder Phase frequenzabhängig vorgenommen wird.

6. Antennenempfangsverfahren nach einem der vorhergehenden Ansprüche, dadurch gekennzeichnet, daß das Störsignal an einem die Störung weiterleitenden Leitersystem abgegriffen wird.

7. Antennenempfangsverfahren nach einem der vorhergehenden Ansprüche, dadurch gekennzeichnet, daß das zu addierende Störsignal durch wenigstens eine galvanische Kopplung abgegriffen wird.

8. Antennenempfangsverfahren nach einem der Ansprüche 1 bis 6, dadurch gekennzeichnet, daß das zu addierende Störsignal durch wenigstens eine induktive und/oder kapazitive Kopplung abgegriffen wird.

9. Antennenempfangsverfahren nach einem der vorhergehenden Ansprüche, dadurch gekennzeichnet, daß die wenigstens eine Empfangsantenne eine Teleskopantenne ist.

10. Antennenempfangsverfahren nach einem der vorhergehenden Ansprüche, dadurch gekennzeichnet, daß die wenigstens eine Empfangsantenne eine integrierte Antenne ist.

11. Antennenempfangsverfahren nach Anspruch 10, dadurch gekennzeichnet, daß wenigstens eine Empfangsantenne in einer Stoßstange, einem Spoiler oder einer Scheibe integriert ist.

12. Antennenempfangsverfahren nach einem der vorhergehenden Ansprüche, dadurch gekennzeichnet, daß das Störsignal mit wenigstens einer zusätzlichen Antennensonde abgegriffen wird.

13. Antennenempfangsverfahren nach Anspruch 12, dadurch gekennzeichnet, daß die Antennensonde eine leitende Fläche ist.

14. Antennenempfangsverfahren nach Anspruch 12 oder 13, dadurch gekennzeichnet, daß die Antennensonde innerhalb einer Fahrzeugstoßstange angeordnet ist.

15. Antennenempfangsverfahren nach einem der Ansprüche 12 bis 14, dadurch gekennzeichnet, daß die Antennensonde zwischen dem Auspuff und der Fahrzeugunterseite angebracht ist.

## Claims

1. Antenna reception method in which an interference signal is added to the received signal for compensating interference signals, characterised in that, the received signal lies in the short, medium or long wave broadcasting range and is received by at least one vehicle antenna, the signal is caused by the vehicle and is picked up at or near a location of maximum interference field strength.

2. Antenna reception method in accordance with Claim 1, characterised in that, the interference signal is altered in its amplitude and/or phase before the addition to the received signal.

3. Antenna reception method in accordance with Claim 1 or 2, characterised in that, the interference signal is rotated phase-like by 180° before the addition to the received signal.

4. Antenna reception method in accordance with any of the preceding Claims, characterised in that, the amplitude of the interference signal is altered before the addition to the received signal in such a way that a maximum signal-to-noise ratio of the received signal occurs after the addition.

5. Antenna reception method in accordance with any of the preceding Claims, characterised in that, the alteration of the amplitude and/or phase is undertaken in dependence on the frequency.

6. Antenna reception method in accordance with any of the preceding Claims, characterised in that, the interference signal is picked up on a conductor system that is conveying the interference.

7. Antenna reception method in accordance with any of the preceding Claims, characterised in that, the interference signal which is to be added is picked up by at least one dc coupling.

8. Antenna reception method in accordance with any of the Claims 1 to 6, characterised in that, the interference signal which is to be added is picked up by at least one inductive and/or capacitive coupling.

9. Antenna reception method in accordance with any of the preceding Claims, characterised in that, the at least one receiving antenna is a telescopic antenna.

10. Antenna reception method in accordance with any of the preceding Claims, characterised in that, the at least one receiving antenna is an integrated antenna.

11. Antenna reception method in accordance with Claim 10, characterised in that, at least one receiving antenna is integrated into a bumper, a spoiler or a windscreen.

12. Antenna reception method in accordance with any of the preceding Claims, characterised in that, the interference signal is picked up by at least one additional antenna sonde.

13. Antenna reception method in accordance with Claim 12, characterised in that, the antenna sonde is a conductive surface.

14. Antenna reception method in accordance with Claim 12 or 13, characterised in that, the antenna sonde is arranged within a vehicle bumper.

15. Antenna reception method in accordance with any of Claims 12 to 14, characterized in that, the antenna sonde is placed between the exhaust and the under side of the vehicle.

## Revendications

1. Procédé de réception par antenne, dans lequel on ajoute au signal de réception un signal parasite à titre de compensation des signaux parasites, caractérisé en ce que le signal de réception est situé dans la plage des ondes radio courtes, moyennes ou longues et est reçu avec au moins une antenne de véhicule, et en ce que le signal parasite est provoqué par le véhicule et capté sur, ou à proximité d'un site où l'intensité du champ parasite est maximale.

2. Procédé de réception par antenne selon la revendication 1, caractérisé en ce que le signal parasite est modifié en amplitude et/ou en phase avant addition avec le signal de réception.

3. Procédé de réception par antenne selon la revendication 1 ou 2, caractérisé en ce que le signal parasite est déphasé de 180° avant addition au signal de réception.

4. Procédé de réception par antenne selon l'une des revendications précédentes, caractérisé en ce que l'amplitude du signal parasite avant addition au signal de réception est modifiée de façon à ce qu'après addition soit produit un rapport signal/bruit maximal pour le signal de réception.

5. Procédé de réception par antenne selon l'une des revendications précédentes, caractérisé en ce que la modification de l'amplitude et/ou le déphasage sont effectués en fonction de la fréquence.

6. Procédé de réception par antenne selon l'une des revendications précédentes, caractérisé en ce que le signal parasite est prélevé sur un système de conducteur véhiculant le parasitage.

7. Procédé de réception par antenne selon l'une des revendications précédentes, caractérisé en ce que le signal parasite à additionner est prélevé par au moins un couplage galvanique.

8. Procédé de réception par antenne selon l'une des revendications 1 à 6, caractérisé en ce que le signal parasite à ajouter est prélevé par au moins un couplage inductif et/ou capacitif.

9. Procédé de réception par antenne selon l'une des revendications précédentes, caractérisé en ce que la au moins une antenne de réception est une antenne télescopique.

10. Procédé de réception par antenne selon l'une des revendications précédentes, caractérisé en ce que la au moins une antenne de réception est une antenne intégrée.

11. Procédé de réception par antenne selon la revendication 10, caractérisé en ce qu'au moins une antenne de réception est intégrée dans un pare-chocs, un aileron ou une vitre.

12. Procédé de réception par antenne selon l'une des revendications précédentes, caractérisé en ce que le signal parasite est prélevé à l'aide d'au moins une sonde d'antenne supplémentaire.

13. Procédé de réception par antenne selon la revendication 12, caractérisé en ce que la sonde d'antenne est une surface conductrice.

14. Procédé de réception par antenne selon la revendication 12 ou 13, caractérisé en ce que la sonde d'antenne est disposée à l'intérieur d'un pare-chocs de véhicule.

15. Procédé de réception par antenne selon l'une des revendications 12 à 14, caractérisé en ce que la sonde d'antenne est montée entre le pot d'échappement et la face inférieure du véhicule.
